# EUROPÄISCHE PATENTSCHRIFT

(11) **EP 3 866 593 B1**
(45) Veröffentlichungstag und Bekanntmachung des Hinweises auf die Patenterteilung: **18.09.2024**
(21) Anmeldenummer: 19780205.1
(22) Anmeldetag: 27.09.2019
(51) Int. Cl.: A01M 21/04

(54) **VERFAHREN ZUM AUSBRINGEN EINES SPRITZMITTELS AUF EIN FELD**
METHOD FOR APPLYING A SPRAY TO A FIELD
PROCÉDÉ D'ÉPANDAGE D'UN PRODUIT DE PULVÉRISATION SUR UN CHAMP

(30) Priorität: 17.10.2018 DE 102018217742
(43) Veröffentlichungstag der Anmeldung: 25.08.2021
(73) Patentinhaber: Robert Bosch GmbH, 70442 Stuttgart (DE)
(72) Erfinder: HOUIS, Nicolas, 74321 Bietigheim-Bissingen (DE); FALCK, Tillmann, 70178 Stuttgart (DE); SEITZ, Peter, 71272 Renningen (DE)
(86) Internationale Anmeldenummer: PCT/EP2019/076173
(87) Internationale Veröffentlichungsnummer: WO 2020/078692

(56) Entgegenhaltungen:
- EP-A1- 3 357 332
- WO-A1-2017/181127
- US-A1- 2018 168 141

## Beschreibung

### Stand der Technik

Die Erfindung geht aus von einem Verfahren zum Ausbringen eines Spritzmittels, insbesondere eines Pflanzenschutzmittels, auf ein Feld mittels einer landwirtschaftlichen Spritzvorrichtung und eine landwirtschaftliche Spritzvorrichtung nach Gattung der unabhängigen Ansprüche. Gegenstand der vorliegenden Erfindung ist auch eine Steuereinheit und ein Computerprogramm.

Algorithmen zur Pflanzreihenerkennung sind bekannt. Die Basis hierfür sind in den meisten Fällen Kameraaufnahmen, welche von einer Feldmaschine aus gemacht wurden. Diese Aufnahmen sind mit starken Neigungswinkeln aufgenommen und zeigen einen möglichst großen Bildabschnitt, um die Detektion von Pflanzreihen möglichst zu vereinfachen.

Ferner sind Verfahren zur Unkrautdetektion und -klassifikation bekannt, welche unter Verwendung hochauflösender kleiner Bilder und vorzugsweise ohne Neigungswinkel durchgeführt werden, um eine ausreichende Bildauflösung für die Detektion kleiner Pflanzenobjekte zu erhalten.

Der geometrische Abstand zwischen dem erfassten Feldabschnitt und dem Spritzbereich auf dem Feld ergibt zusammen mit der Fahrgeschwindigkeit die maximale Reaktionszeit eines Systems. Wenn für Bildaufnahme, -verarbeitung, interne Kommunikationszeiten, Düsen- bzw. Ventilansteuerung und Spritzmittelflugzeit mehr Zeit nötig ist, kann das System keine ortskorrekte Applikation durchführen. Wesentliche Parameter um den geometrischen Abstand zu vergrößern, sind vor allem der geometrische Abstand zwischen Kamera und Spritzdüse, der Neigungswinkel der Kamera und die Länge des erfassten Feldabschnitts, d.h. des erfassten Bildabschnitts am Boden des Feldes. Hierbei besteht ein Zielkonflikt zwischen der Pflanzenreihendetektion, deren Güte mit der Länge des Bildabschnitts in Fahrtrichtung zunimmt, und der Unkrautdetektion, bei der hochaufgelöste und möglichst kleine Bilder erforderlich sind, um eine ausreichende Bodenauflösung zu erhalten und die Verarbeitungszeit zu minimieren, wodurch letztendlich die Arbeitsgeschwindigkeit begrenzt wird.

Aus der noch unveröffentlichten DE 10 2017 210 804 ist ein Verfahren zum Ausbringen eines Pflanzenschutzmittels bekannt, bei dem Pflanzenreihen in einem erfassten Feldabschnitt identifiziert, Pflanzenbereiche und Beikrautbereiche in dem erfassten Feldabschnitt definiert, eine Pflanzenkennzahl des Beikrautbereiches des erfassten Feldabschnitts ermittelt und in Abhängigkeit davon das Pflanzenschutzmittel auf den Beikrautbereich ausgebracht wird. Weiterer relevanter Stand der Technik ist bspw. die WO 2017/181127 A1.

### Offenbarung der Erfindung

Gegenstand der vorliegenden Erfindung ist ein Verfahren zum Ausbringen eines Spritzmittels, insbesondere eines Pflanzenschutzmittels, auf ein Feld mittels einer landwirtschaftlichen Spritzvorrichtung, mit den Schritten:
- Erfassen eines Feldabschnitts des Feldes mit Pflanzen mittels einer optischen und/oder Infrarot-Erfassungseinheit;
- Identifizieren von zumindest einer Pflanzenreihe in dem erfassten Feldabschnitt mittels einer Recheneinheit;
- Definieren eines die zumindest eine identifizierte Pflanzenreihe umfassenden Pflanzenbereiches unter Verwendung der zumindest einen identifizierten Pflanzenreihe und eines von dem Pflanzenbereich verschiedenen Beikrautbereiches in einem vorgegebenen Auswerteabschnitt des erfassten Feldabschnitts mittels der Recheneinheit;
- Ermitteln einer Pflanzenkennzahl des Beikrautbereiches in dem vorgegebenen Auswerteabschnitt des erfassten Feldabschnitts mittels der Recheneinheit; und
- Ausbringen des Spritzmittels auf den Beikrautbereich des vorgegebenen Auswerteabschnitts in Abhängigkeit von der ermittelten Pflanzenkennzahl mittels Spritzdüsen der landwirtschaftlichen Spritzvorrichtung.

Gegenstand der vorliegenden Erfindung ist ferner eine Steuereinheit mit einer Recheneinheit, wobei die Steuereinheit eingerichtet ist, die Schritte des vorangehend beschriebenen Verfahrens durchzuführen und/oder zu steuern, insbesondere die folgenden Schritte durchzuführen:
- zumindest einer Pflanzenreihe in einem mittels einer optischen und/oder Infrarot-Erfassungseinheit erfassten Feldabschnitt eines Feldes mit Pflanzen zu identifizieren;
- einen die zumindest eine identifizierte Pflanzenreihe umfassenden Pflanzenbereich unter Verwendung der zumindest einen identifizierten Pflanzenreihe und einen von dem Pflanzenbereich verschiedenen Beikrautbereich in einem vorgegebenen Auswerteabschnitt des erfassten Feldabschnitts zu definieren;
- eine Pflanzenkennzahl des Beikrautbereiches in dem vorgegebenen Auswerteabschnitt des erfassten Feldabschnitts zu ermitteln; und
- ein Steuersignal derart auszugeben, dass ein Spritzmittel auf den Beikrautbereich des vorgegebenen Auswerteabschnitts in Abhängigkeit von der ermittelten Pflanzenkennzahl mittels Spritzdüsen einer landwirtschaftlichen Spritzvorrichtung ausgebracht wird.

Gegenstand der vorliegenden Erfindung ist außerdem eine landwirtschaftliche Spritzvorrichtung mit
- einer optischen und/oder Infrarot-Erfassungseinheit zum Erfassen eines Feldabschnitts des Feldes mit Pflanzen, wobei eine optische Achse der optischen und/oder Infrarot-Erfassungseinheit einen Neigungswinkel größer 0° relativ zu der Vertikalen in Fahrtrichtung der Spritzvorrichtung aufweist.
- einer vorangehend beschriebenen Steuereinheit; und
- Spritzdüsen zum Ausbringen eines Spritzmittels auf den Beikrautbereich des vorgegebenen Auswerteabschnitts in Abhängigkeit von der ermittelten Pflanzenkennzahl.

Gegenstand der vorliegenden Erfindung sind schließlich ein Computerprogramm, das dazu eingerichtet ist, die Schritte des vorangehend beschriebenen Verfahrens durchzuführen und/oder zu steuern sowie ein maschinenlesbares Speichermedium, auf dem das Computerprogramm gespeichert ist.

Das Spritzmittel ist insbesondere eine Spritzflüssigkeit. Das Spritzmittel kann ein landwirtschaftliches Präparat bzw. Pflanzenschutzmittel, insbesondere ein Pflanzenschutzmittelkonzentrat aufweisen oder sein. Das Spritzmittel kann demnach bspw. ein Herbizid, Fungizid oder ein Insektizid (Pestizid) aufweisen. Das Spritzmittel kann jedoch auch ein Düngemittel, insbesondere ein Düngemittelkonzentrat aufweisen oder sein. Das Spritzmittel kann demnach einen Wachstumsregulator aufweisen. Das Spritzmittel kann ein granulares Wirkmittel, das mit einer Trägerflüssigkeit vermischt wird, aufweisen.

Unter einem Feld kann vorliegend eine landwirtschaftlich genutzte Fläche, eine Anbaufläche für Pflanzen oder auch eine Parzelle einer solchen Fläche bzw. Anbaufläche verstanden werden. Das Feld kann somit eine Ackerfläche, ein Grünland oder eine Weide sein. Die Pflanzen können beispielsweise Nutzpflanzen, deren Frucht landwirtschaftlich genutzt wird, beispielsweise als Nahrungsmittel, Futtermittel oder als Energiepflanze.

Der erfasste Feldabschnitt kann ein Erfassungsabschnitt bzw. ein erfasster Bildabschnitt, insbesondere der gesamte erfasste Bildabschnitt einer optischen und/oder Infrarot-Erfassungseinheit sein. Der erfasste Feldabschnitt ist bevorzugt ein zusammenhängender Feldabschnitt. Unter einer optischen Erfassungseinheit kann beispielsweise eine Kamera oder eine 3D-Kamera verstanden werden. Die optische und/oder Infrarot-Erfassungseinheit kann kalibriert sein, um z. B. die Höhenzuordnung aus erfassten Bilder zu errechnen. Die optische und/oder Infrarot-Erfassungseinheit kann auf einer mobilen Einheit angeordnet sein, wobei die mobile Einheit insbesondere als Landfahrzeug und/oder Luftfahrzeug und/oder als Anhänger ausgebildet sein kann. Die mobile Einheit kann insbesondere eine landwirtschaftliche Arbeitsmaschine, bspw. eine Zugmaschine, ein Schlepper, eine selbstfahrende bzw. autonome Feldspritze oder ein selbstfahrender bzw. autonomer Roboter sein.

Der Schritt des Erfassens des Feldabschnitts kann bspw. während einer Überfahrt einer mobilen Einheit, welche die optische und/oder Infrarot-Erfassungseinheit aufweist, über dem Feld erfolgen. Hierbei können die Pflanzen in dem Feldabschnitt bzw. erfassten Bildabschnitt mittels der optischen und/oder Infrarot-Erfassungseinheit gleichzeitig erfasst werden.

Der Schritt des Identifizierens bzw. Erkennens der zumindest einen Pflanzenreihe kann durchgehend bzw. permanent, d.h. für jeden Schritt des Definierens des Pflanzenbereiches und des Beikrautbereiches und des Ermittelns der Pflanzenkennzahl durchgeführt werden. Der Schritt des Identifizierens der zumindest einen Pflanzenreihe erfolgt bevorzugt unter Verwendung und/oder Auswertung des gesamten bzw. im Wesentlichen gesamten erfassten Feldabschnitts, d.h. in dem Bild mit der maximal möglichen Länge L(Feld), welche bestimmt wird durch die Anbauposition der Erfassungseinheit bzw. Kamera und den verwendetem Imagerchip.

Hierbei werden zunächst die Pflanzen erfasst. Unter einem Erfassen von Pflanzen kann beispielsweise das Bestimmen des Vorhandenseins von Pflanzen in dem Feldabschnitt verstanden werden, insbesondere ohne dass dabei eine Klassifizierung der Pflanzen erfolgt. Der Schritt des Erfassens von Pflanzen kann ein Erfassen eines Farbanteils bzw. Farbwerts, insbesondere eines grünen Farbanteils und/oder eines roten Farbanteils und/oder eines Infrarotanteils in dem erfassten Feldabschnitt bzw. Bildabschnitt umfassen. Hierbei können mittels der optischen und/oder Infrarot-Erfassungseinheit, bspw. anhand eines vorbestimmten NDVI-Wertes (Normalized Differenced Vegetation Index, er wird aus Reflexionswerten im nahen infraroten und sichtbaren roten Wellenlängenbereich des Lichtspektrums gebildet) Pflanzen erfasst werden, indem Biomasse vom (Erd-) Boden unterschieden wird. Vorteilhafterweise kann das Identifizieren der Pflanzenreihe unter Verwendung zumindest einer der folgenden Informationen erfolgen: Farbanteil, insbesondere grüner Farbanteil der erfassten Pflanzen, Infrarotanteil der erfassten Pflanzen, Pflanzenabstand, Pflanzreihenabstand, Wachstumsstadium der Pflanzen, Geokoordinaten einer Aussaat der Pflanzen. Mittels dieser Informationen bzw. Eigenschaften können die Pflanzenreihen auf einfache und sichere Art und Weise identifiziert werden. Da sich Pflanzenreihen im Wesentlichen geradlinig erstrecken, kann die Identifizierung einer Pflanzenreihe auch bspw. durch Einpassung einer Geraden bzw. einer geradlinigen Pflanzenreihenmittelpunktlinie in eine Bildtrajektorie mit dem höchsten grünen Farbanteil bzw. Grünwert erfolgen. In dem Schritt des Identifizierens werden bevorzugt alle Pflanzenreihen in dem erfassten Feldabschnitt identifiziert.

Der vorgegebene bzw. definierte Auswerteabschnitt ist ein vorgegebener bzw. definierter Teilabschnitt des erfassten Feldabschnitts bzw. innerhalb des erfassten Feldabschnitts. Der vorgegebene Auswerteabschnitt und der erfasste Feldabschnitt weisen in Fahrtrichtung der Spritzvorrichtung bevorzugt die gleiche Breite auf. Der vorgegebene Auswerteabschnitt weist jedoch in Fahrtrichtung der Spritzvorrichtung eine kleinere Länge L(Auswerte) als die Länge L(Feld) des erfassten Feldabschnitts auf. Die Länge L(Auswerte) des vorgegebenen bzw. definierten Auswerteabschnitts ist bevorzugt konstant. Die Position des vorgegebenen bzw. definierten Auswerteabschnitts innerhalb des erfassten Feldabschnitts kann (während der Durchführung des Verfahrens) konstant sein. Die Position des vorgegebenen bzw. definierten Auswerteabschnitts innerhalb des erfassten Feldabschnitts kann jedoch auch (während der Durchführung des Verfahrens) variieren. Die Festlegung der Länge L(Auswerte) des vorgegebenen Auswerteabschnitts kann entweder innerhalb einer nachgelagerten Bildverarbeitungssoftware der Recheneinheit oder, wenn durch die optische Erfassungseinheit bzw. Kamera unterstützt, direkt als ROI-Definition (region of interest) auf Ebene des Imagerchips der optischen Erfassungseinheit bzw. Kamera erfolgen.

Im Gegensatz zu dem Schritt des Identifizierens der zumindest einen Pflanzenreihe, welcher in dem (gesamten) erfassten Feldabschnitt durchgeführt wird, werden die Schritte des Definierens eines Pflanzenbereiches und eines von dem Pflanzenbereich verschiedenen Beikrautbereiches und des Ermittelns einer Pflanzenkennzahl des Beikrautbereiches in dem vorgegebenen Auswerteabschnitt, d.h. nur in einem Teilabschnitt des erfassten Feldabschnitts durchgeführt. D.h., mit anderen Worten, dass der Schritt des Definierens eines Pflanzenbereiches und eines von dem Pflanzenbereich verschiedenen Beikrautbereiches und der Schritt des Ermittelns einer Pflanzenkennzahl des Beikrautbereiches nur bzw. ausschließlich in dem vorgegebenen Auswerteabschnitt des erfassten Feldabschnitts durchgeführt werden.

Der Schritt des Definierens des Pflanzenbereiches erfolgt unter Verwendung der zumindest einen identifizierten Pflanzenreihe bzw. der entsprechenden Pflanzenreihenposition. Die Verwendung der zumindest einen identifizierten Pflanzenreihe bzw. der entsprechenden Pflanzenreihenposition umfasst hierbei sowohl die unmittelbare als auch die mittelbare Verwendung der entsprechenden Daten bzw. Informationen. D.h., mit anderen Worten, dass die Verwendung der zumindest einen identifizierten Pflanzenreihe auch eine Abwandlung, bspw. eine Extrapolation der entsprechenden Daten bzw. Informationen umfasst, ohne dabei den Rahmen der vorliegenden Erfindung zu verlassen.

Der Pflanzenbereich und der Beikrautbereich erstrecken sich vollständig innerhalb des vorgegebenen Auswerteabschnitts. Der Pflanzenbereich kann die Pflanzen der Pflanzenreihe in dem vorgegebenen Auswerteabschnitt vollständig umfassen. Der Pflanzenbereich kann jedoch auch die Pflanzenreihe umfassen, ohne dass die einzelnen Pflanzen der Pflanzenreihe vollständig umfasst sind. Demnach kann der Pflanzenbereich die einzelnen Pflanzen der Pflanzenreihe auch nur teilweise umfassen. Der Pflanzenbereich kann um die jeweilige Pflanzenreihenmittelpunktlinie definiert werden, bspw. mit einer konstanten bzw. definierten oder einer variablen Breite. Der Pflanzenbereich kann jedoch auch die Pflanzenreihenmittelpunktlinie selbst sein. Der Beikrautbereich erstreckt sich bevorzugt zwischen den Pflanzenreihen in dem vorgegebenen Auswerteabschnitt. Der Beikrautbereich kann ein Restbereich des vorgegebenen Auswerteabschnitts sein, welcher sich nach der Definition des Pflanzenbereiches in dem vorgegebenen Auswerteabschnitt ergibt.

Die Pflanzenkennzahl kann einen Bedeckungsgrad des Beikrautbereiches in dem vorgegebenen Auswerteabschnitt von pflanzlichem Material und/oder eine Menge an pflanzlichem Material in dem Beikrautbereich und/oder eine Anzahl an Beikräutern in dem Beikrautbereich repräsentieren bzw. sein. Der Bedeckungsgrad ist über das Verhältnis von durch pflanzlichem Material bedeckter Fläche zu Gesamtfläche definiert. Der Bedeckungsgrad ist demnach das Verhältnis des bewachsenen Bereiches im Beikrautbereich zum gesamten Beikrautbereich. Dazu kann die Anzahl der Pixel in dem erfassten Bild bestimmt werden, an denen pflanzliches Material detektiert wird. Demnach kann mittels der Pflanzenkennzahl eine Maßzahl für den Befall abgeleitet werden, in Abhängigkeit derer entschieden wird, ob und ggf. wie, d.h. mit welcher Ausbringmenge der Beikrautbereich behandelt wird.

Der Schritt des Ausbringens wird in Abhängigkeit von einer Größe der ermittelten Pflanzenkennzahl durchgeführt. Der Schritt des Ausbringens kann ein Vergleichen der ermittelten Pflanzenkennzahl mit einem Schwellwert umfassen, wobei bei Erreichen, Unterschreiten oder Überschreiten des Schwellwerts der Schritt des Ausbringens ausgeführt wird. Der Schwellwert kann manuell eingebbar sein. In Abhängigkeit der Kultur im Feld, des Wachstumsstadiums und/oder des verwendeten Pflanzenschutzmittels kann hierbei eine sog. Spritzregel hinterlegt sein, d.h. ein Zusammenhang zwischen einer bestimmten Pflanzenkennzahl und der Entscheidung, ob und wieviel Pflanzenschutzmittel appliziert werden soll. Als Beispiel könnte die Regel lauten: "Wenn der Bedeckungsgrad im Beikrautbereich >5%, dann wird appliziert". Vorteilhafterweise wird in dem Schritt des Ausbringens das Spritzmittel im Wesentlichen gleichmäßig auf den Beikrautbereich ausgebracht. Unter einem gleichmäßigen Ausbringen kann im Rahmen der vorliegenden Erfindung ein Ausbringen mit einer vordefinierten Ausbringmenge pro Fläche verstanden werden. Unter einer vordefinierten Ausbringmenge kann eine vorab bzw. zu Beginn der Behandlung festgelegt Ausbringmenge verstanden werden. Die vordefinierte Ausbringmenge ist hierbei eine im Wesentlichen konstante Ausbringmenge pro Fläche. Die definierte Ausbringmenge kann voreingestellt bzw. vorab eingebbar sein. Hierbei wird das Spritzmittel bevorzugt flächig ausgebracht. Diese Maßnahme führt zu einer weiteren Vereinfachung des Verfahrens bzw. Gesamtsystems, da zum einen keine Regelung der Spritzmenge und zum anderen auch keine Identifizierung der Pflanzen bzw. Pflanzenpositionen erforderlich sind. Das Ausbringen kann kontinuierlich und/oder mit einem spezifischen Ausbringmuster erfolgen.

Die landwirtschaftliche Spritzvorrichtung kann insbesondere Teil einer landwirtschaftlichen Feldspritze bzw. eines Pflanzenschutzgerätes sein oder als eine landwirtschaftliche Feldspritze bzw. ein Pflanzenschutzgerät ausgebildet sein. Die landwirtschaftliche Spritzvorrichtung kann eine Vielzahl von Spritzdüsen und Flüssigkeitstanks umfassen. Die landwirtschaftliche Spritzvorrichtung kann eine mobile Einheit umfassen oder auf einer mobilen Einheit angeordnet sein, wobei die mobile Einheit insbesondere als Landfahrzeug und/oder Luftfahrzeug und/oder Anhänger ausgebildet sein kann. Die mobile Einheit kann insbesondere eine landwirtschaftliche Arbeitsmaschine, bspw. eine Zugmaschine, ein Schlepper, eine selbstfahrende bzw. autonome Feldspritze oder ein selbstfahrender bzw. autonomer Roboter sein. Die Spritzvorrichtung kann die Erfassungseinheit umfassen oder auf derselben mobilen Einheit wie die Erfassungseinheit angeordnet sein. Vorteilhafterweise wird das Verfahren automatisiert durchgeführt, um eine schnelle und zuverlässige Behandlung eines Feldes zu ermöglichen.

Die Schritte des Identifizierens der zumindest einen Pflanzenreihe, des Definierens des Pflanzenbereiches und des Beikrautbereiches und des Ermittelns der Pflanzenkennzahl werden mittels einer Recheneinheit durchgeführt. Die Recheneinheit ist zur Bildverarbeitung ausgebildet bzw. eingerichtet. Demnach weist die Recheneinheit eine entsprechende Bildverarbeitungssoftware auf. Die Recheneinheit kann beispielsweise ein Signalprozessor, ein Mikrocontroller oder dergleichen aufweisen. Die Recheneinheit ist Teil einer Steuereinheit, welche eingerichtet ist, ein Steuersignal derart auszugeben, dass ein Spritzmittel auf den Beikrautbereich des vorgegebenen Auswerteabschnitts in Abhängigkeit von der ermittelten Pflanzenkennzahl bzw. einer Größe der ermittelten Pflanzenkennzahl mittels Spritzdüsen eine Spritzvorrichtung ausgebracht wird. Die Steuereinheit kann - außer der Recheneinheit zum Verarbeiten von Signalen oder Daten - ferner zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Demnach kann das erfindungsgemäße Verfahren beispielsweise in Software oder Hardware oder in einer Mischform aus Software und Hardware in der Steuereinheit bzw. einem Steuergerät implementiert sein.

Durch das erfindungsgemäße Verfahren und die erfindungsgemäße Spritzvorrichtung ist es nunmehr möglich, auf sehr einfache Art und Weise die maximale Fahr- bzw. Arbeitsgeschwindigkeit bei der Behandlung eines Feldes zu erhöhen und dabei dem einleitend beschriebenen Zielkonflikt Rechnung zu tragen. Dies wird insbesondere dadurch ermöglicht, dass zwar die notwendige Identifizierung der Pflanzenreihen in dem (gesamten) erfassten Feldabschnitt, die Bestimmung der Pflanzenkennzahl jedoch lediglich in einem (kleineren) vorgegebenen Auswerteabschnitt, d.h. in einem Teilabschnitt des erfassten Feldabschnitts durchgeführt wird. Die Bildverarbeitung wird demnach in zwei parallele Prozesspfade mit unterschiedlichen Bildgrößen aufgeteilt. Aufgrund der geringeren Anzahl an Pixeln im Bild zur Bestimmung der Pflanzenkennzahl sinkt somit die notwendige Verarbeitungszeit. Zum anderen kann durch eine entsprechende Positionierung des Auswerteabschnitts in dem Feldabschnitt (weg von der Kamera) der für die Applikationsfähigkeit maßgebliche Reaktionsweg erhöht werden. Beide Faktoren, geringere Verarbeitungszeit und vergrößerter Reaktionsweg, steigern die maximal mögliche Fahr- bzw. Arbeitsgeschwindigkeit.

Des Weiteren ist hierbei vorteilhafterweise keine Klassifizierung der Pflanzen bzw. Pflanzenobjekte notwendig. Stattdessen macht sich die Erfindung die Tatsache zunutze, dass die Kulturpflanzen in Pflanzreihen angebaut werden und die Bei- bzw. Unkräuter und Ungräser ungleichmäßig auf dem Feld verteilt sind. Demnach werden erfindungsgemäß ein Pflanzenbereich mit der Pflanzenreihe und ein Beikrautbereich definiert, wobei per Definition alle Pflanzen in dem Pflanzenbereich als Kulturpflanzen und alle Pflanzen in dem Beikrautbereich als zu behandelnde Pflanzen, insbesondere Beikräuter bzw. Unkräuter angesehen werden. Das Ausbringen bzw. die Applikation des vordefinierten Spritzmittels erfolgt dann auf den Beikrautbereich auf Basis einer ermittelten Pflanzenkennzahl, ohne eine Klassifizierung oder Selektion und auch unabhängig von der Anordnung der Pflanzen.

Es ist vorteilhaft, wenn die Position des vorgegebenen Auswerteabschnitts in dem erfassten Feldabschnitt derart gewählt wird, dass der vorgegebene Auswerteabschnitt in Fahrtrichtung der Spritzvorrichtung einen im Vergleich zu dem erfassten Feldabschnitt größeren Reaktionsweg x, insbesondere maximalen Reaktionsweg x zu einem Spritzbereich, d.h. dem Rand eines Spritzbereiches der nachfolgenden Spritzdüse aufweist oder im Wesentlichen mittig in dem erfassten Feldabschnitt angeordnet ist. Unter einem Spritzbereich soll hierbei der Feldbereich verstanden werden, welcher mittels des Spritzmittels/des Spritzstrahls aus der Spritzdüse behandelbar/erreichbar ist bzw. behandelt/erreicht wird. D.h., mit anderen Worten, dass der Spritzbereich eine Spritzoberfläche bzw. Spritzbedeckung ist. Der Spritzbereich ist u.a. von der Spritzcharakteristik der Spritzdüsen abhängig. Durch die erste Alternative können der Reaktionsweg x (auf Kosten der Bildauflösung) und damit die Reaktionszeit maximiert werden. Bei höheren Ansprüchen an die Genauigkeit kann durch die zweite Alternative die höchste Bildqualität erreicht werden, da mittig im Bild die Linsenfehler am geringsten sind, wobei der Reaktionsweg x ebenfalls erhöht wird.

Es ist ferner vorteilhaft, wenn die Position des vorgegebenen Auswerteabschnitts in dem erfassten Feldabschnitt in Abhängigkeit von einer Fahrgeschwindigkeit der Spritzvorrichtung gewählt wird, insbesondere derart gewählt wird, dass bei einer vorgegebenen Fahrgeschwindigkeit der Spritzvorrichtung eine maximale Bildauflösung in dem vorgegebenen Auswerteabschnitt resultiert. Durch diese Maßnahme wird automatisiert in Abhängigkeit von der Fahrgeschwindigkeit die maximale bzw. bestmögliche Bildauflösung gewählt, wodurch die Genauigkeit des Verfahrens, insbesondere des Ermittelns der Pflanzenkennzahl gesteigert werden kann.

Des Weiteren ist es vorteilhaft, wenn der Schritt des Identifizierens der zumindest einen Pflanzenreihe (unmittelbar) nach einem definierten zurückgelegten Streckenabschnitt und/oder (unmittelbar) nach definierten Zeitabständen und/oder (unmittelbar) nach unregelmäßigen Zeitabständen und/oder (unmittelbar) nach einer durchgeführten Richtungsänderung der landwirtschaftlichen Spritzvorrichtung in einem definierten Winkelbereich und/oder wenn Rechenzeit verfügbar ist wiederholt wird, um die aktuelle Position der Pflanzenreihen neu zu identifizieren. Die Richtungsänderung kann insbesondere ein Wenden bzw. ein Wendevorgang sein, so dass unmittelbar nach Durchführung bzw. Abschluss der Richtungsänderung bzw. des Wendevorgangs die der Schritt des Identifizierens der zumindest einen Pflanzenreihe wiederholt wird. Die Richtungsänderung kann insbesondere mittels eines Beschleunigungssensors detektiert werden. Hierbei ist es insbesondere vorteilhaft, wenn während dieser Zeitabstände, d.h. zwischen den Schritten des Definierens der zumindest einen Pflanzenreihe für den Schritt und/oder die Schritte des Definierens des zumindest einen Pflanzenbereiches die Position der zumindest einen Pflanzenreihe in Fahrtrichtung der Spritzvorrichtung extrapoliert oder als konstant angenommen wird. D.h., mit anderen Worten, dass der Schritt des Identifizierens der zumindest einen Pflanzenreihe nicht permanent, d.h. nicht für jeden Schritt des Definierens des Pflanzenbereiches und des Beikrautbereiches und des Ermittelns der Pflanzenkennzahl durchgeführt wird. Demnach werden der Schritt des Identifizierens der zumindest einen Pflanzenreihe auf der einen Seite und die Schritte des Definierens des Pflanzenbereiches und des Beikrautbereiches und des Ermittelns der Pflanzenkennzahl auf der anderen Seite in jeweils parallelen asynchronen "Prozesspfaden" durchgeführt. Dieses Vorgehen ist möglich, da die analysierten Größen sich auf zwei verschiedenen Zeitskalen ändern: Während die Pflanzenkennzahl, bspw. der Bedeckungsgrad eine extrem lokale Größe ist, an die hohe Anforderungen bezüglich ihrer Latenz gestellt werden ("Spritzentscheidung"), ist die Pflanzenreihenposition annähernd konstant. Änderungen in der Pflanzenreihenposition ergeben sich lediglich aus der Fahr- bzw. Kamerabewegung, Ungenauigkeiten bei der Aussaat, sowie dem Geländeprofil. Diese Änderungen finden auf vergleichsweisen langen Zeitskalen statt und auch dann gradueller Natur. Somit können die Pflanzreihenpositionen in Fahrtrichtung extrapoliert oder als konstant angenommen werden und als Input für die Ermittlung der Pflanzenkennzahl in dem parallelen "Prozesspfad" dienen. Hierdurch wird Zeit bzw. Rechenzeit für die Bildaufnahmen, Bildverarbeitung und interne Kommunikationszeit eingespart, so dass die gesamte Reaktionszeit weiter gekürzt bzw. gesenkt werden kann.

Es ist außerdem vorteilhaft, wenn der Pflanzenbereich eine variable Breite aufweist, wobei die Breite von einem Wachstumsstadium einer in dem entsprechenden Bereich angeordneten Pflanze des Pflanzenbereiches abhängt. Eine solche Ausführungsform des hier vorgeschlagenen Ansatzes bietet den zusätzlichen Vorteil, dass das unterschiedliche Breitenwachstum der Kulturpflanzen in dem Pflanzenbereich mitberücksichtigt wird. Hierdurch wird insbesondere verhindert, dass Teile der Kulturpflanze, welche in den Beikrautbereich ragen, nicht als Beikraut gewertet werden. Dazu wird anhand des Wachstumsstadiums der Kulturpflanze ein Schlauch um den eigentlichen Pflanzreihenmittelpunkt definiert werden. Pflanzenteile/-pixel welche direkt an einem Pflanzenpixel aus dem Kulturpflanzenbereich grenzen, werden dann ebenfalls als Kulturpflanze bewertet (Nachbarschaftspixel).

Ausführungsbeispiele der Erfindung sind in den Zeichnungen dargestellt und in der nachfolgenden Beschreibung näher erläutert. Es zeigt:
- Fig. 1: eine schematische Darstellung einer erfindungsgemäßen landwirtschaftlichen Spritzvorrichtung;
- Fig. 2: eine schematische Darstellung einer grundsätzlichen geometrischen Anordnung von Erfassungseinheit und Spritzdüse zueinander;
- Fig. 3: eine schematische Darstellung eines erfassten Feldabschnitts mit einem vorgegebenen Auswerteabschnitt; und
- Fig. 4: ein Ablaufdiagramm eines Verfahrens gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

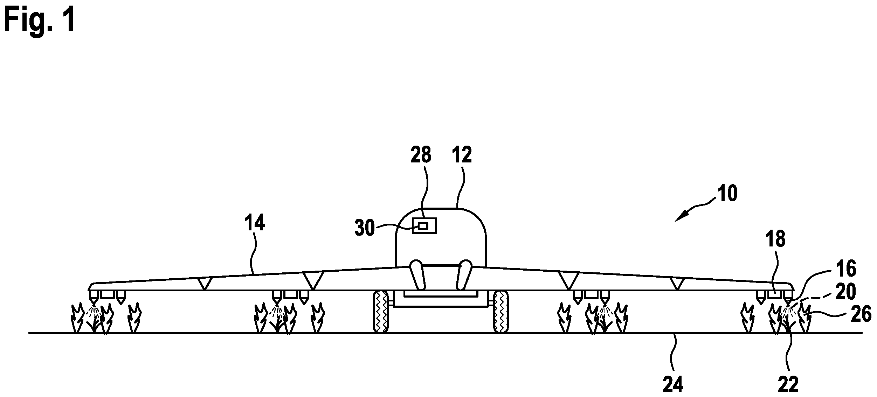

In Fig. 1 ist eine schematische Darstellung einer landwirtschaftlichen Spritzvorrichtung dargestellt, welche in ihrer Gesamtheit mit dem Bezugszeichen 10 versehen ist.

Die landwirtschaftliche Spritzvorrichtung 10 ist als Feldspritze 10 ausgebildet. Die Feldspritze 10 ist an einem mobilen Landfahrzeug 12 angeordnet, welches als Zugmaschine 12 bzw. Traktor 12 ausgebildet ist.

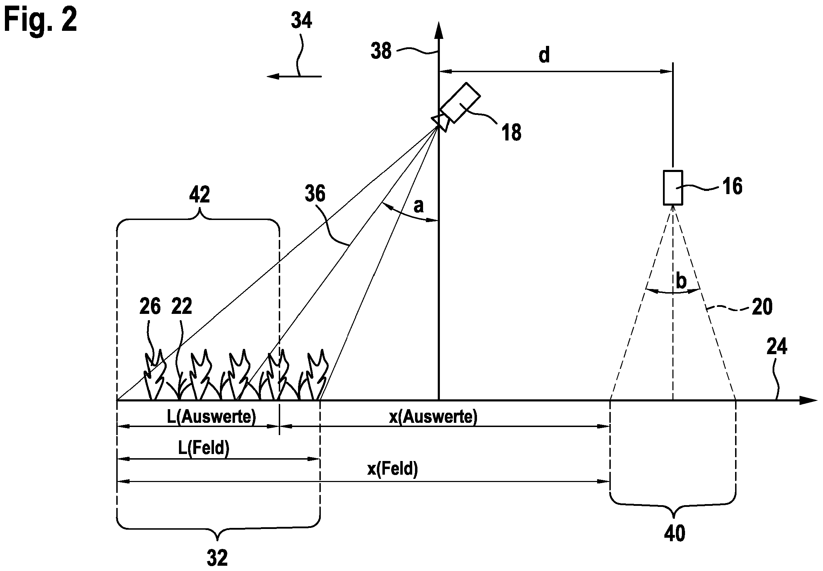

Die landwirtschaftliche Spritzvorrichtung 10 weist ein Spritzgestänge 14 auf. An dem Spritzgestänge 14 sind Spritzdüsen 16 und optische Erfassungseinheiten 18 angeordnet. Die Spritzdüsen 14 sind ausgebildet ein Spritzmittel 20 auf Beikräuter 22 einer landwirtschaftlichen Fläche 24 auszubringen. Die optische Erfassungseinheiten 18 sind als optische Kameras 18 ausgebildet. Die optischen Kameras 18 umfassen jeweils eine Filtereinheit, um einen Farbanteil wie beispielsweise den grünen Farbanteil eines erfassten Bildes zu extrahieren, um Beikräuter 22 und Pflanzen 26 zu erfassen. Wie anhand Fig. 2 nachfolgend näher beschrieben wird, sind die Kameras 18 in Fahrtrichtung der Spritzvorrichtung 10 vor den Spritzdüsen 16 angeordnet.

Die landwirtschaftliche Spritzvorrichtung 10 weist ferner eine (nicht gezeigte) Fördereinheit auf, mittels derer die Ausbringmenge bzw. eine Wirkmittelmenge in der auszubringenden Spritzmittel 20 einstellbar bzw. variierbar ist.

Die landwirtschaftliche Spritzvorrichtung 10 weist außerdem eine Steuereinheit 28 auf, welche mit den optischen Kameras 18 verbunden ist, um Informationen von diesen zu empfangen. Die Steuereinheit 28 weist eine Recheneinheit 30 auf, welche ausgebildet ist, Berechnungsschritte bzw. Bildverarbeitungsschritte zur Durchführung des erfindungsgemäßen Verfahrens auszuführen. Die Steuereinheit 28 ist ferner ausgebildet, ein Steuersignal derart auszugeben, dass das Spritzmittel 20 in Abhängigkeit von der ermittelten Pflanzenkennzahl mittels der Spritzdüsen 16 ausgebracht wird.

Fig. 2 zeigt eine grundsätzliche geometrische Anordnung einer Spritzdüse 16 und einer Erfassungseinheit 18 bzw. Kamera 18 auf der landwirtschaftlichen Spritzvorrichtung 10. Wie einleitend erläutert, ist eine möglichst große Länge L(Feld) eines mittels der Kamera 18 erfassten Feldabschnitts 32 für die Pflanzenreihenidentifizierung gewünscht bzw. vorteilhaft, da dadurch die Anzahl der Pflanzen 26 im erfassten Feldabschnitt 32 bzw. erfassten Bildabschnitt steigt und somit die Identifizierung der Pflanzenreihen erleichtert wird. Gleichzeitig sinkt bei einer begrenzten Anzahl von Bildpixeln die Bildauflösung in dem erfassten Bildabschnitt und damit die Fähigkeit auch kleine Pflanzobjekte zu erkennen. Zusätzlich sinkt bei einem konstantem Neigungswinkel a ein Reaktionsweg x(Feld). Der Neigungswinkel a ist hierbei der Winkel in Fahrtrichtung 34 der Spritzvorrichtung 10 zwischen einer optischen Achse 36 der Kamera 18 und einer Vertikalen 38.

Der Reaktionsweg x, d.h. der geometrische Abstand x zwischen dem erfassten Feldabschnitt 32 und einem Spritzbereich 40 der nachfolgenden Spritzdüse 16 ergibt zusammen mit der Fahrgeschwindigkeit der Spritzvorrichtung 10 die maximale Reaktionszeit t(max) des Systems bzw. der Spritzvorrichtung 10. Wenn für Bildaufnahme, -verarbeitung, interne Kommunikationszeiten, Düsen- bzw. Ventilansteuerung und Spritzmittelflugzeit mehr Zeit nötig ist als t(max), kann das System bzw. der Spritzvorrichtung 10 keine ortskorrekte Applikation durchführen. Demnach geben der Reaktionsweg x und die Reaktionszeit t(max) die maximale Fahr- bzw. Arbeitsgeschwindigkeit des Systems bzw. der Spritzvorrichtung 10 vor. Wesentliche Parameter um x zu vergrößern, sind vor allem ein geometrischer Abstand d zwischen Kamera 18 und Spritzdüse 16, der Neigungswinkel a der Kamera 18 und die Länge L(Feld) des erfassten Feldabschnitts 32, d.h. des erfassten Bildabschnitts am Boden des Feldes 24.

Um nun die maximale Fahr- bzw. Arbeitsgeschwindigkeit zu erhöhen, wird erfindungsgemäß nicht die Länge L(Feld) des erfassten Feldabschnitts 32 verkürzt, da diese wie vorangehend erläutert für die Pflanzenreihenidentifizierung möglichst groß sein soll, sondern ein neuer (kleinerer) Auswerteabschnitt 42 des erfassten Feldabschnitts 32 mit einer Länge L(Auswerte) vorgegeben bzw. definiert. Hierdurch wird die Bildverarbeitung in zwei parallel Prozesspfade aufgeteilt, wobei vorteilhafterweise der Schritt des Identifizierens von Pflanzenreihen in dem erfassten Feldabschnitt 32 mit der größeren Länge L(Feld) und die Schritte des Definierens von Pflanzenbereichen und Beikrautbereichen und des Ermittelns einer Pflanzenkennzahl in dem vorgegebenen Auswerteabschnitt 42 mit der kleineren Länge L(Auswerte) durchgeführt wird.

Da die Länge L(Auswerte) des vorgegebenen Auswerteabschnitts 42 in Fahrtrichtung 34 der Spritzvorrichtung 10 kleiner ist als die Länge L(Feld) des erfassten Feldabschnitts 32 sinkt zum einen aufgrund der geringeren Anzahl an Pixeln im Bild des vorgegebenen Auswerteabschnitts 42 die notwendige Verarbeitungszeit und somit die Reaktionszeit t(max). Ferner ist im gezeigten Ausführungsbeispiel die Position des vorgegebenen Auswerteabschnitts 42 in dem erfassten Feldabschnitt 32 derart gewählt, dass der vorgegebene Auswerteabschnitt 42 in Fahrtrichtung 34 der Spritzvorrichtung 10 einen größeren Reaktionsweg x(Auswerte) als der erfasste Feldabschnitt 32 x(Feld) zu dem Spritzbereich 40 der nachfolgenden Spritzdüse 16 aufweist. Hierdurch steigt der für die Applikationsfähigkeit maßgebliche Reaktionsweg x. Beide Faktoren, geringere Verarbeitungszeit und vergrößerter Reaktionsweg, erhöhen die maximal mögliche Fahr- bzw. Arbeitsgeschwindigkeit.

Um die Verarbeitungszeit weiter zu verkürzen, wird der Schritt des Identifizierens der Pflanzenreihen 44 nicht permanent durchgeführt, sondern vielmehr erst nach einem definierten zurückgelegten Streckenabschnitt der Spritzvorrichtung 10 wiederholt. Zwischen den Schritten des Identifizierens der Pflanzenreihen 44 wird dabei für die Schritte des Definierens der Pflanzenbereiche 46 die Position der Pflanzenreihen 44 in Fahrtrichtung 34 der Spritzvorrichtung 10 extrapoliert.

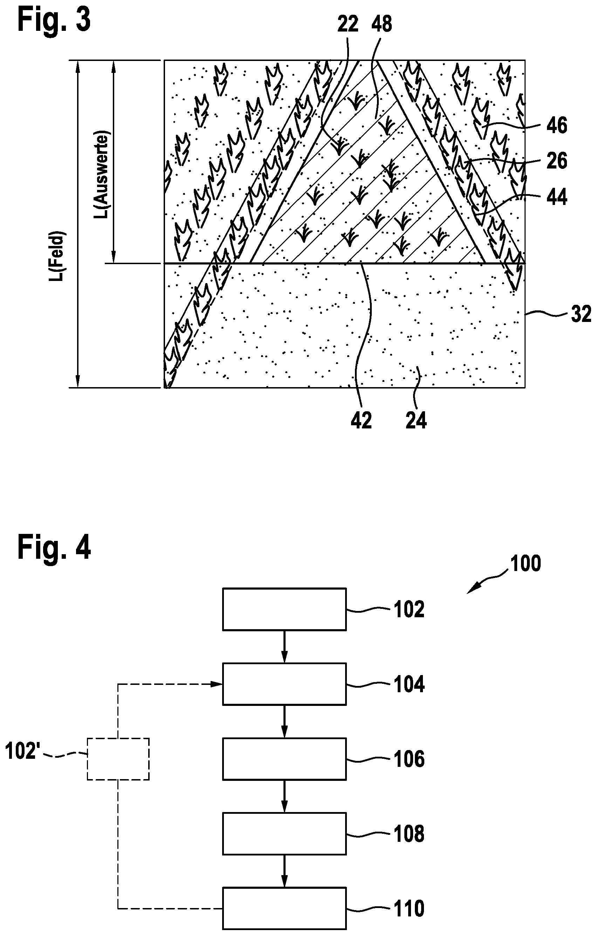

Wie Fig. 3 veranschaulicht, erfolgt mittels der Recheneinheit 30 in einem "Prozesspfad" in dem (gesamten) erfassten Feldabschnitt 32 bzw. dem (gesamten) erfassten Bild des Feldabschnitts 32 ein Identifizieren der zumindest eine Pflanzenreihe 44, bspw. anhand des erfassten grünen Farbanteils. In einem parallelen "Prozesspfad" hingegen erfolgt mittels der Recheneinheit 30 nun in dem vorgegebenen Auswerteabschnitt 42 des erfassten Feldabschnitts 32 ein Definieren eines die zumindest eine identifizierte Pflanzenreihe 44 umfassenden Pflanzenbereiches 46 unter Verwendung der identifizierten Pflanzenreihe 44 und eines von dem Pflanzenbereich 46 verschiedenen Beikrautbereiches 48. Der Beikrautbereich 48 ist hierbei als Bereich zwischen den Pflanzenreihen 44 in dem vorgegebenen Auswerteabschnitt 42 definiert. Der Beikrautbereich 48 ist ein Bereich, welcher per Definition nur Beikräuter 22 aufweist. Ferner erfolgt in dem parallelen "Prozesspfad" ein Ermitteln einer Pflanzenkennzahl des Beikrautbereiches 48 in dem vorgegebenen Auswerteabschnitt 42 des erfassten Feldabschnitts 32.

Die ermittelte Pflanzenkennzahl dient zur Entscheidung, ob und/oder wie der Beikrautbereich 48 behandelt werden soll. Im gezeigten Beispiel erfolgt die Entscheidung, ob der Beikrautbereich 48 behandelt, d.h. ob Spritzmittel abgegeben wird, in Abhängigkeit von Beikrautbefall des Beikrautbereiches 48. Demnach repräsentiert die Pflanzenkennzahl einen Bedeckungsgrad des Beikrautbereiches 48 von pflanzlichem Material. Erreicht bzw. überschreitet die Pflanzenkennzahl einen vordefinierten Schwellwert, so erfolgt ein Ausbringen des Spritzmittels 20 auf den Beikrautbereich 48 mittels der Spritzvorrichtung 10, um den Beikrautbereich 48 bzw. die Beikräuter 22 in dem Beikrautbereich 48 zu behandeln.

Fig. 4 zeigt ein Ablaufdiagramm eines Ausführungsbeispiels des hier vorgestellten Ansatzes als Verfahren 100 zum Ausbringen eines Spritzmittels 20, insbesondere eines Pflanzenschutzmittels 20, auf ein Feld 24. Das Verfahren 100 umfasst einen Schritt des Erfassens 102 eines Feldabschnitts 32 des Feldes 24 mit Pflanzen 26 mittels einer optischen und/oder Infrarot-Erfassungseinheit 18. Das Verfahren 100 umfasst ferner einen Schritt des Identifizierens 104 von zumindest einer Pflanzenreihe 44 in dem erfassten Feldabschnitt 32 mittels einer Recheneinheit 30. Das Verfahren 100 umfasst der Weiteren einen Schritt des Definierens 106 eines die zumindest eine identifizierte Pflanzenreihe 44 umfassenden Pflanzenbereiches 46 unter Verwendung der zumindest einen identifizierten Pflanzenreihe 44 und eines von dem Pflanzenbereich 46 verschiedenen Beikrautbereiches 48 in einem vorgegebenen Auswerteabschnitt 42 des erfassten Feldabschnitts 32 mittels der Recheneinheit 30. Das Verfahren 100 umfasst außerdem einen Schritt des Ermittelns 108 einer Pflanzenkennzahl des Beikrautbereiches 48 in dem vorgegebenen Auswerteabschnitt 42 des erfassten Feldabschnitts 32 mittels der Recheneinheit 30. Das Verfahren 10 umfasst schließlich einen Schritt des Ausbringens 110 des Spritzmittels 20 auf den Beikrautbereich 48 des vorgegebenen Auswerteabschnitts 42 in Abhängigkeit von der ermittelten Pflanzenkennzahl mittels Spritzdüsen 16 der Spritzvorrichtung 10.

Vorteilhafterweise kann der Schritt des Identifizierens 104 der zumindest einen Pflanzenreihe 44 erst nach einem definierten zurückgelegten Streckenabschnitt oder in unregelmäßigen Zeitabständen oder wenn Rechenzeit verfügbar ist wiederholt werden, um die Position der Pflanzenreihen 44 neu zu identifizieren. Hierbei kann zwischen den Schritten des Identifizierens 104 der zumindest einen Pflanzenreihe 44 für die Schritte des Definierens 106 des zumindest einen Pflanzenbereiches 46 in einem Schritt des Extrapolierens 102' die Position der zumindest einen Pflanzenreihe 44 in Fahrtrichtung 34 der Spritzvorrichtung 10 extrapoliert werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren zum Ausbringen eines Spritzmittels (20), insbesondere eines Pflanzenschutzmittels (20), auf ein Feld (24) mittels einer landwirtschaftlichen Spritzvorrichtung (10), mit den Schritten:
- Erfassen (102) eines Feldabschnitts (32) des Feldes (24) mit Pflanzen (26) mittels einer optischen und/oder Infrarot-Erfassungseinheit (18);
- Identifizieren (104) von zumindest einer Pflanzenreihe (44) in dem erfassten Feldabschnitt (32) mittels einer Recheneinheit (30);
- Definieren (106) eines die zumindest eine identifizierte Pflanzenreihe (44) umfassenden Pflanzenbereiches (46) unter Verwendung der zumindest einen identifizierten Pflanzenreihe (44) und eines von dem Pflanzenbereich (46) verschiedenen Beikrautbereiches (48) in einem vorgegebenen Auswerteabschnitt (42) des erfassten Feldabschnitts (32) mittels der Recheneinheit (30);
- Ermitteln (108) einer Pflanzenkennzahl des Beikrautbereiches (48) in dem vorgegebenen Auswerteabschnitt (42) des erfassten Feldabschnitts (32) mittels der Recheneinheit (30); und
- Ausbringen (110) des Spritzmittels (20) auf den Beikrautbereich (48) des vorgegebenen Auswerteabschnitts (42) in Abhängigkeit von der ermittelten Pflanzenkennzahl mittels Spritzdüsen (16) der landwirtschaftlichen Spritzvorrichtung (10).

2. Verfahren (100) nach Anspruch 1, **dadurch gekennzeichnet, dass** in Fahrtrichtung (34) der Spritzvorrichtung (10) die Länge L(Auswerte) des vorgegebenen Auswerteabschnitts (42) kleiner als die Länge L(Feld) des erfassten Feldabschnitts (32).

3. Verfahren (100) nach Anspruch 2, **dadurch gekennzeichnet, dass** die Position des vorgegebenen Auswerteabschnitts (42) in dem erfassten Feldabschnitt (32) derart gewählt wird, dass der vorgegebene Auswerteabschnitt (42) in Fahrtrichtung (34) der Spritzvorrichtung (10)
- einen im Vergleich zu dem erfassten Feldabschnitt (32) größeren Reaktionsweg x(Auswerte), insbesondere maximalen Reaktionsweg x(Auswerte) zu einem Spritzbereich (40) der nachfolgenden Spritzdüse (16) aufweist oder
- im Wesentlichen mittig in dem erfassten Feldabschnitt (32) angeordnet ist.

4. Verfahren (100) nach Anspruch 2 oder 3, **dadurch gekennzeichnet, dass** die Position des vorgegebenen Auswerteabschnitts (42) in dem erfassten Feldabschnitt (32) in Abhängigkeit von einer Fahrgeschwindigkeit der Spritzvorrichtung (10) gewählt wird, insbesondere derart gewählt wird, dass bei einer vorgegebenen Fahrgeschwindigkeit der Spritzvorrichtung (10) eine maximale Bildauflösung in dem vorgegebenen Auswerteabschnitt (42) resultiert.

5. Verfahren (100) nach einem der vorhergehenden Ansprüche, **dadurch gekennzeichnet, dass** der Schritt des Identifizierens (104) der zumindest einen Pflanzenreihe (44) unter Verwendung und/oder Auswertung des im Wesentlichen gesamten erfassten Feldabschnitts (32) erfolgt.

6. Verfahren (100) nach einem der vorhergehenden Ansprüche, **dadurch gekennzeichnet, dass** der Schritt des Identifizierens (104) der zumindest einen Pflanzenreihe (44) nach einem definierten zurückgelegten Streckenabschnitt und/oder nach definierten Zeitabständen und/oder nach unregelmäßigen Zeitabständen und/oder einer durchgeführten Richtungsänderung der landwirtschaftlichen Spritzvorrichtung in einem definierten Winkelbereich und/oder wenn Rechenzeit verfügbar ist wiederholt wird, um die aktuelle Position der Pflanzenreihen neu zu identifizieren.

7. Verfahren (100) nach Anspruch 6, **dadurch gekennzeichnet, dass** zwischen den Schritten des Identifizierens (104) der zumindest einen Pflanzenreihe (44) für den Schritt und/oder die Schritte des Definierens (106) des zumindest einen Pflanzenbereiches (46) die Position der zumindest einen Pflanzenreihe (44) in Fahrtrichtung (34) der Spritzvorrichtung (10) extrapoliert wird oder als konstant angenommen wird.

8. Verfahren (100) nach einem der vorhergehenden Ansprüche, **dadurch gekennzeichnet, dass** die Pflanzenkennzahl einen Bedeckungsgrad des Beikrautbereiches (48) von pflanzlichem Material und/oder eine Menge an pflanzlichem Material in dem Beikrautbereich (48) und/oder eine Anzahl an Beikräutern (22) in dem Beikrautbereich (48) repräsentiert.

9. Verfahren (100) nach einem der vorhergehenden Ansprüche, **dadurch gekennzeichnet, dass** der Schritt (110) des Ausbringens ein Vergleichen der ermittelten Pflanzenkennzahl mit einem Schwellwert umfasst, wobei bei Erreichen, Unterschreiten oder Überschreiten des Schwellwerts der Schritt (110) des Ausbringens ausgeführt wird.

10. Verfahren (100) nach einem der vorhergehenden Ansprüche, **dadurch gekennzeichnet, dass** der Pflanzenbereich (46) eine variable Breite aufweist, wobei die Breite von einem Wachstumsstadium einer in dem entsprechenden Bereich angeordneten Pflanze (26) des Pflanzenbereiches (46) abhängt.

11. Steuereinheit mit einer Recheneinheit (30), wobei die Steuereinheit (28) eingerichtet ist, die Schritte des Verfahrens (100) nach einem der Ansprüche 1 bis 10 durchzuführen und/oder zu steuern, insbesondere die folgenden Schritte durchzuführen:
- zumindest einer Pflanzenreihe (44) in einem mittels einer optischen und/oder Infrarot-Erfassungseinheit (18) erfassten Feldabschnitt (32) eines Feldes (24) mit Pflanzen (26) zu identifizieren;
- einen die zumindest eine identifizierte Pflanzenreihe (44) umfassenden Pflanzenbereich (46) unter Verwendung der zumindest einen identifizierten Pflanzenreihe (44) und einen von dem Pflanzenbereich (46) verschiedenen Beikrautbereich (48) in einem vorgegebenen Auswerteabschnitt (42) des erfassten Feldabschnitts (32) zu definieren;
- eine Pflanzenkennzahl des Beikrautbereiches (48) in dem vorgegebenen Auswerteabschnitt (42) des erfassten Feldabschnitts (32) zu ermitteln; und
- ein Steuersignal derart auszugeben, dass ein Spritzmittel (20) auf den Beikrautbereich (48) des vorgegebenen Auswerteabschnitts (42) in Abhängigkeit von der ermittelten Pflanzenkennzahl mittels Spritzdüsen (16) einer landwirtschaftlichen Spritzvorrichtung (10) ausgebracht wird.

12. Landwirtschaftliche Spritzvorrichtung (10) mit
- einer optischen und/oder Infrarot-Erfassungseinheit (18) zum Erfassen (102) eines Feldabschnitts (32) des Feldes (24) mit Pflanzen (26), wobei eine optische Achse (36) der optischen und/oder Infrarot-Erfassungseinheit (18) einen Neigungswinkel (a) größer 0° relativ zu der Vertikalen (38) in Fahrtrichtung (34) der Spritzvorrichtung (10) aufweist.
- einer Steuereinheit (28) nach Anspruch 11; und
- Spritzdüsen (16) zum Ausbringen (110) eines Spritzmittels (20) auf den Beikrautbereich (48) des vorgegebenen Auswerteabschnitts (42) in Abhängigkeit von der ermittelten Pflanzenkennzahl.

13. Computerprogramm, das dazu eingerichtet ist, die Schritte des Verfahrens (100) nach einem der Ansprüche 1 bis 10 durchzuführen und/oder zu steuern.

14. Maschinenlesbares Speichermedium, auf dem das Computerprogramm nach Anspruch 13 gespeichert ist.

## Claims

1. Method for dispensing a spray (20), in particular of a plant protectant agent (20), onto a field (24) by means of an agricultural spraying apparatus (10), having the steps:
- acquiring (102) a field section (32) of the field (24) with plants (26) by means of an optical and/or infrared acquisition unit (18);
- identifying (104) at least one row of plants (44) in the acquired field section (32) by means of a processing unit (30);
- defining (106) a plant area (46), which encompasses the at least one identified row of plants (44), using the at least one identified row of plants (44), and a weed area (48), which differs from the plant area (46), in a specified evaluation section (42) of the acquired field section (32) by means of the processing unit (30);
- ascertaining (108) a plant parameter of the weed area (48) in the specified evaluation section (42) of the acquired field section (32) by means of the processing unit (30); and
- dispensing (110) the spray (20) onto the weed area (48) of the specified evaluation section (42) in a manner dependent on the ascertained plant parameter by means of spray nozzles (16) of the agricultural spraying apparatus (10).

2. Method (100) according to Claim 1, **characterized in that**, in a direction of travel (34) of the spraying apparatus (10), the length L(evaluation) of the specified evaluation section (42) is smaller than the length L(field) of the acquired field section (32).

3. Method (100) according to Claim 2, **characterized in that** the position of the specified evaluation section (42) in the acquired field section (32) is selected such that, in the direction of travel (34) of the spraying apparatus (10), the specified evaluation section (42)
- has a reaction distance x(evaluation) larger than the acquired field section (32), in particular a maximum reaction distance x(evaluation), to a spraying area (40) of the following spray nozzle (16), or
- is arranged substantially centrally in the acquired field section (32).

4. Method (100) according to Claim 2 or 3, **characterized in that** the position of the specified evaluation section (42) in the acquired field section (32) is selected in a manner dependent on a travelling speed of the spraying apparatus (10), in particular is selected such that a specified travelling speed of the spraying apparatus (10) results in a maximum image resolution in the specified evaluation section (42).

5. Method (100) according to any of the preceding claims, **characterized in that** the step of identifying (104) the at least one row of plants (44) is carried out using and/or evaluating substantially the entire acquired field section (32).

6. Method (100) according to any of the preceding claims, **characterized in that** the step of identifying (104) the at least one row of plants (44) is repeated after a defined route section has been covered and/or after defined time intervals and/or after irregular time intervals and/or the agricultural spraying apparatus has performed a change in direction in a defined angle range and/or if processing time is available, in order to newly identify the present position of the rows of plants.

7. Method (100) according to Claim 6, **characterized in that**, between the steps of identifying (104) the at least one row of plants (44), for the step and/or the steps of defining (106) the at least one plant area (46), the position of the at least one row of plants (44) is extrapolated, or assumed to be constant, in the direction of travel (34) of the spraying apparatus (10).

8. Method (100) according to any of the preceding claims, **characterized in that** the plant parameter represents a degree of coverage of the weed area (48) by plant material and/or an amount of plant material in the weed area (48) and/or a number of weeds (22) in the weed area (48).

9. Method (100) according to any of the preceding claims, **characterized in that** the step (110) of dispensing comprises a comparison of the ascertained plant parameter with a threshold value, wherein the step (110) of dispensing is carried out if the threshold value is reached, undershot or overshot.

10. Method (100) according to any of the preceding claims, **characterized in that** the plant area (46) has a variable width, wherein the width is dependent on a stage of growth of a plant (26), which is arranged in the corresponding area, of the plant area (46).

11. Control unit having a processing unit (30), wherein the control unit (28) is configured to carry out and/or control the steps of the method (100) according to any of Claims 1 to 10, in particular to carry out the following steps:
- to identify at least one row of plants (44) in a field section (32), acquired by means of an optical and/or infrared acquisition unit (18), of a field (24) with plants (26);
- to define a plant area (46), which encompasses the at least one identified row of plants (44), using the at least one identified row of plants (44), and a weed area (48), which differs from the plant area (46), in a specified evaluation section (42) of the acquired field section (32);
- to ascertain a plant parameter of the weed area (48) in the specified evaluation section (42) of the acquired field section (32); and
- to output a control signal such that a spray (20) is dispensed onto the weed area (48) of the specified evaluation section (42) in a manner dependent on the ascertained plant parameter by means of spray nozzles (16) of an agricultural spraying apparatus (10).

12. Agricultural spraying apparatus (10) having
- an optical and/or infrared acquisition unit (18) for acquiring (102) a field section (32) of the field (24) with plants (26), wherein an optical axis (36) of the optical and/or infrared acquisition unit (18) has an inclination angle (a) of greater than 0° relative to the vertical (38) in a direction of travel (34) of the spraying apparatus (10);
- a control unit (28) according to Claim 11; and
- spray nozzles (16) for dispensing (110) a spray (20) onto the weed area (48) of the specified evaluation section (42) in a manner dependent on the ascertained plant parameter.

13. Computer program which is configured to carry out and/or control the steps of the method (100) according to any of Claims 1 to 10.

14. Machine-readable memory medium on which the computer program according to Claim 13 is stored.

## Revendications

1. Procédé d'épandage d'un agent de pulvérisation (20), notamment d'un agent phytosanitaire (20), sur un champ (24) au moyen d'un dispositif de pulvérisation agricole (10), ledit procédé comprenant les étapes suivantes :
- détecter (102) une portion (32) du champ (24) pourvu de plantes (26) au moyen d'une unité de détection optique et/ou infrarouge (18) ;
- identifier (104) au moins une rangée de plantes (44) dans la portion de champ détectée (32) au moyen d'une unité informatique (30) ;
- définir (106) une zone de plantes (46), comprenant l'au moins une rangée de plantes identifiée (44), à l'aide de l'au moins une rangées de plantes identifiées (44) et d'une zone de mauvaises herbes (48), différente de la zone de plantes (46), dans une portion d'évaluation spécifiée (42) de la portion de champ détectée (32) au moyen de l'unité informatique (30) ;
- déterminer (108) un numéro d'identification de plante de la zone de mauvaises herbes (48) dans la portion d'évaluation spécifiée (42) de la portion de champ détectée (32) au moyen de l'unité informatique (30) ; et
- épandre (110) l'agent de pulvérisation (20) sur la zone de mauvaises herbes (48) de la portion d'évaluation spécifiée (42) en fonction du numéro d'identification de plante déterminé au moyen de buses de pulvérisation (16) du dispositif de pulvérisation agricole (10).

2. Procédé (100) selon la revendication 1, **caractérisé en ce que**, dans la direction de déplacement (34) du dispositif de pulvérisation (10), la longueur L(évaluation) de la portion d'évaluation spécifiée (42) est inférieure à la longueur L(champ) de la portion de champ détectée (32).

3. Procédé (100) selon la revendication 2, **caractérisé en ce que** la position de la portion d'évaluation spécifiée (42) dans la portion de champ détectée (32) est choisie de telle sorte que la portion d'évaluation spécifiée (42) dans la direction de déplacement (34) du dispositif de pulvérisation (10)
- comporte un trajet de réaction x(évaluations), supérieur à la portion de champ détectée (32), en particulier un trajet de réaction maximal x(évaluations), par rapport à une zone de pulvérisation (40) de la buse de pulvérisation suivante (16) ou
- est disposée sensiblement au milieu de la portion de champ détectée (32).

4. Procédé (100) selon la revendication 2 ou 3, **caractérisé en ce que** la position de la portion d'évaluation spécifiée (42) dans la portion de champ détectée (32) est choisie en fonction d'une vitesse de déplacement du dispositif de pulvérisation (10), en particulier est choisie de manière à ce que, à une vitesse de déplacement spécifiée du dispositif de pulvérisation (10), il en résulte une résolution d'image maximale dans la portion d'évaluation spécifiée (42).

5. Procédé (100) selon l'une des revendications précédentes, **caractérisé en ce que** l'étape d'identification (104) de l'au moins une rangée de plantes (44) est réalisée à l'aide et/ou par évaluation de sensiblement toute la portion de champ détectée (32).

6. Procédé (100) selon l'une des revendications précédentes, **caractérisé en ce que** l'étape d'identification (104) de l'au moins une rangée de plantes (44) est répétée après un intervalle d'espace parcouru défini et/ou après des intervalles de temps définis et/ou après des intervalles de temps irréguliers et/ou un changement de direction effectué du dispositif de pulvérisation agricole dans une plage angulaire définie et/ou si du temps de calcul est disponible afin d'identifier à nouveau la position actuelle des rangées de plantes.

7. Procédé (100) selon la revendication 6, **caractérisé en ce que**, entre les étapes d'identification (104) de l'au moins une rangée de plantes (44) pour l'étape et/ou les étapes de définition (106) de l'au moins une zone de plantes (46), la position de l'au moins une rangée de plantes (44) dans la direction de déplacement (34) du dispositif de pulvérisation (10) est extrapolée ou est supposée constante.

8. Procédé (100) selon l'une des revendications précédentes, **caractérisé en ce que** le numéro d'identification de plante représente un degré de couverture de la zone de mauvaises herbes (48) par de la matière végétale et/ou une quantité de matière végétale dans la zone de mauvaises herbes (48) et/ou un certain nombre de mauvaises herbes (22) dans la zone de mauvaises herbes (48).

9. Procédé (100) selon l'une des revendications précédentes, **caractérisé en ce que** l'étape (110) d'épandage comprend la comparaison du numéro d'identification de plante déterminé à une valeur seuil, l'étape d'épandage (110) étant réalisée lorsque la valeur seuil est atteinte, franchie vers le bas ou franchie vers le haut.

10. Procédé (100) selon l'une des revendications précédentes, **caractérisé en ce que** la zone végétale (46) a une largeur variable, la largeur dépendant d'un stade de croissance d'une plante (26) de la zone végétale (46) disposée dans la zone correspondante.

11. Unité de commande comprenant une unité de calcul (30), l'unité de commande (28) étant conçue pour réaliser et/ou commander les étapes du procédé (100) selon l'une des revendications 1 à 10, notamment pour réaliser les étapes suivantes :
- identifier au moins une rangée de plantes (44) dans une portion (32) d'un champ (24) pourvu de plantes (26) qui est détectée au moyen d'une unité de détection optique et/ou infrarouge (18) ;
- définir une zone de plantes (46), comprenant au moins une rangée de plantes identifiée (44) à l'aide de l'au moins une rangée de plantes identifiée (44) et une zone de mauvaises herbes (48), différente de la zone de plantes (46), dans une portion d'évaluation spécifiée (42) de la portion de champ détectée (32) ;
- déterminer un numéro d'identification de plante de la zone de mauvaises herbes (48) dans la portion d'évaluation spécifiée (42) de la portion de champ détectée (32) ; et
- délivrer un signal de commande de manière à ce qu'un agent de pulvérisation (20) soit épandu sur la zone de mauvaises herbes (48) de la portion d'évaluation spécifiée (42) au moyen de buses de pulvérisation (16) d'un dispositif de pulvérisation agricole (10) en fonction du numéro d'indentification de plante déterminé.

12. Dispositif de pulvérisation agricole (10) comprenant
- une unité de détection optique et/ou infrarouge (18) destinée à détecter (102) une portion (32) du champ (24) pourvu de plantes (26), un axe optique (36) de l'unité de détection optique et/ou infrarouge (18) présentant un angle d'inclinaison (a) supérieur à 0° par rapport à la verticale (38) dans la direction de déplacement (34) du dispositif de pulvérisation (10),
- une unité de commande (28) selon la revendication 11 ; et
- des buses de pulvérisation (16) destinées à épandre (110) un agent de pulvérisation (20) sur la zone de mauvaises herbes (48) de la portion d'évaluation spécifiée (42) en fonction du numéro d'identification de plante déterminé.

13. Programme informatique qui est conçu pour réaliser et/ou commander les étapes du procédé (100) selon l'une des revendications 1 à 10.

14. Support de stockage lisible par machine sur lequel le programme informatique selon la revendication 13 est mémorisé.
